# FASCICULE DE BREVET EUROPEEN

(11) **EP 1 642 706 B1**
(45) Date de publication et mention de la délivrance du brevet: **15.11.2006**
(21) Numéro de dépôt: 04425729.3
(22) Date de dépôt: 29.09.2004
(51) Int. Cl.: B29D 31/518, A43B 9/00, A43B 5/16, A43B 5/04

(54) **Chaussure de sport en matériau très rigide**
Sportschuh aus sehr hartem Material
Very hard material sports boot

(43) Date de publication de la demande: 05.04.2006
(73) Titulaire: LANGE INTERNATIONAL S.A., 1700 Fribourg (CH)
(72) Inventeur: Confortin, Emanuele, 31030 Albaredo di Vedelago (TV) (IT); Fregoni, Andrea, 31038 Paese (TV) (IT)
(74) Mandataire: Bugnion Genève

(56) Documents cités:
- EP-A- 0 903 087
- EP-A- 1 295 540
- EP-A- 1 444 908
- FR-A- 2 119 653
- FR-A- 2 766 065

## Description

L'invention concerne un sous-ensemble de chaussure de sport ainsi que la chaussure de sport elle-même, et est particulièrement adaptée au domaine des chaussures pour planche de glisse telle que ski ou surf ou des chaussures de patinage, qui subissent des efforts importants lors de leur utilisation et pour lesquelles une structure particulièrement résistante est nécessaire. Par exemple, l'invention concerne les sous-ensembles de type coque ou collier d'une chaussure de ski. L'invention concerne de plus un procédé de fabrication.

Une chaussure de ski est un bon exemple de chaussure qui subit de nombreux efforts et doit être dotée d'une bonne rigidité. Toutefois, elle doit aussi posséder une souplesse suffisante pour assurer un confort au skieur et lui permettre d'ouvrir la chaussure pour la chausser et l'enlever et lui permettre de fléchir ses genoux vers l'avant.

Un procédé de fabrication de chaussure de ski a été décrit dans le brevet EP1295540, permettant la réalisation d'une chaussure de ski à l'aide de plusieurs tissus de fibres de carbone reliés par une résine par une technique de polymérisation de la résine sur des moules pour former deux demi-coques, avant l'association des deux demi-coques pour former finalement la chaussure. Ce procédé permettant d'obtenir une chaussure très rigide présente toutefois un premier inconvénient d'être complexe et coûteux, en comparaison des techniques actuellement utilisées d'injection, une telle injection n'étant pas applicable avec un matériau armé, un second inconvénient de ne pas répondre aux exigences de souplesse de ces chaussures, et un troisième inconvénient de ne permettre qu'un design basic pour la surface extérieure de la chaussure. Pour ces raisons, il a vite été abandonné.

Pour répondre aux inconvénients précédents, les procédés de fabrication de chaussures de ski les plus utilisés aujourd'hui sont basés sur des procédés d'injection de matériaux plastiques de type polyuréthane, polypropylène, polyéthylène ou polyamide. Une telle solution est décrite dans la demande de brevet EP0903087, qui divulgue une coque de chaussure composée d'une première couche dans un matériau plastique relativement rigide, de type polyuréthane, recouverte partiellement par une seconde couche dans un matériau plastique plus souple, la couche relativement rigide comportant des zones plus épaisses pour former des renforts sur certaines surfaces précisément choisies. Un premier inconvénient de cette solution est qu'elle augmente grandement le poids global de la chaussure du fait du poids des matériaux utilisés et de leur épaisseur globalement importante. Un second inconvénient provient du fait que les performances obtenues au niveau de la rigidité sont médiocres, malgré les quelques surépaisseurs utilisées. Un troisième inconvénient provient du fait que ces chaussures sont mal adaptées à la réalisation d'esthétiques sur leurs surfaces extérieures. En effet, l'esthétique de la surface extérieure peut soit être réalisée à l'aide de formes spécifiques données au matériau plastique placé sur la surface extérieure de la chaussure, ce qui induit des surépaisseurs de plastique pour réaliser des dessins, ces surépaisseurs entraînant un surpoids et une augmentation de la rigidité de la chaussure, et donc finalement ayant un impact négatif sur les caractéristiques essentielles de la chaussure, soit être réalisée à l'aide de marquages sur la surface extérieure de la chaussure, ces marquages étant en général peu résistants dans le temps suite aux nombreuses agressions qu'ils subissent.

Un objet de la présente invention consiste à proposer un sous-ensemble de chaussure de sport et son procédé de fabrication, qui ne présentent pas les inconvénients de l'art antérieur.

Plus précisément, un premier objet de la présente invention consiste à proposer un sous-ensemble de chaussure de sport qui permette d'atteindre une bonne rigidité tout en conservant des zones de souplesse.

Un second objet de la présente invention consiste à proposer un sous-ensemble de chaussure de sport qui soit léger.

Un troisième objet de la présente invention consiste à proposer un sous-ensemble de chaussure de sport qui présente une esthétique attrayante.

Un quatrième objet de la présente invention consiste à proposer un procédé de fabrication d'un sous-ensemble de chaussure de sport relativement simple.

Selon le concept de l'invention, la paroi d'un sous-ensemble de chaussure de sport combine astucieusement l'utilisation d'un matériau très rigide et d'un matériau plastique souple, de manière à atteindre un bon compromis de rigidité et de souplesse pour un poids minimal. Cette combinaison de matériaux est de plus définie pour permettre la mise en oeuvre d'un procédé de fabrication simple.

Plus précisément, l'invention porte sur un sous-ensemble de chaussure de sport de type coque ou collier tel que défini dans la revendication 16.

Avantageusement, le matériau très rigide occupe au moins la moitié de la surface totale de la paroi du sous-ensemble.

L'invention porte aussi spécifiquement sur une coque de chaussure de ski et sur une chaussure de ski.

Elle concerne aussi un procédé de fabrication d'un sous-ensemble de chaussure de sport de type coque ou collier tel que défini dans la revendication 1.

L'ébauche en matériau très rigide peut être obtenue à partir d'une feuille composite composée d'une matrice thermoplastique ou thermodurcissable armée de fibres, ou par emboutissage d'une tôle.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue de côté de la face extérieure d'une première partie d'une coque de chaussure de ski selon l'invention ;
la figure 2 représente une vue en coupe selon l'axe II, de la première partie de la coque de chaussure de ski de la figure 1 ;
la figure 3 représente une vue de côté de la face intérieure de la première partie de la coque de chaussure de ski de la figure 1;
la figure 4 est une vue de dessous des deux parties de la coque de chaussure de ski selon l'invention avant leur assemblage.

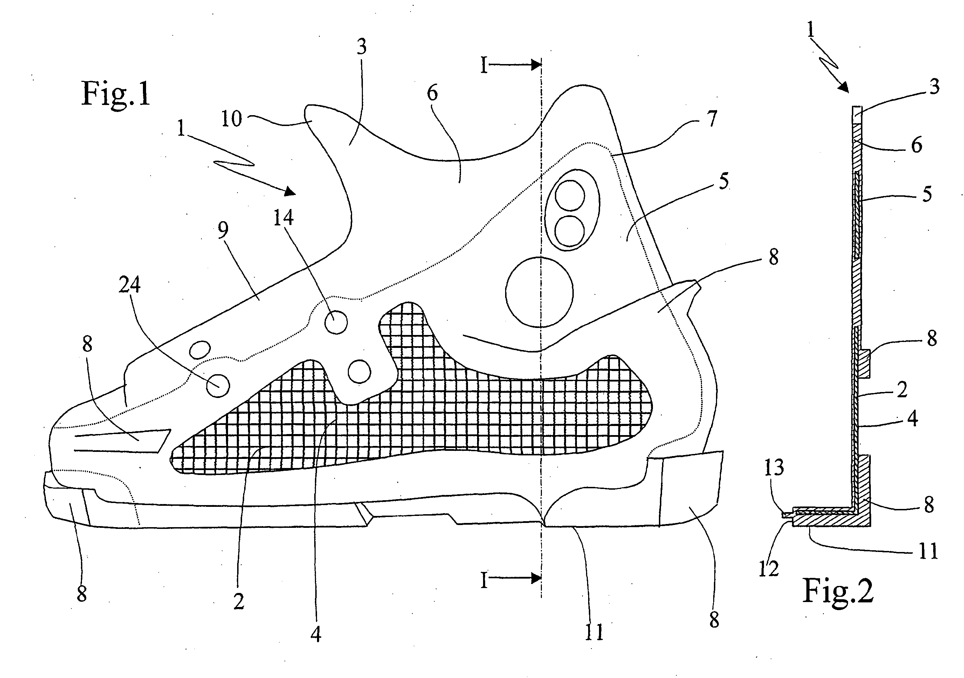

Les figures 1 à 4 illustrent un mode d'exécution de l'invention pour fabriquer une coque de chaussure de ski.

Les figures 1 à 3 illustrent une première partie 1 d'une coque de chaussure de ski selon l'invention.

Cette partie 1 présente une paroi qui se compose d'un matériau très rigide 2 et d'un matériau plastique souple 3. Dans ce mode d'exécution, le matériau très rigide est un matériau armé, composé d'une matrice thermoplastique de polyuréthane armée de fibres de carbone et le matériau plastique souple est un polyuréthane de dureté de 55 shd.

Comme cela est représenté sur la figure 1, la face extérieure de la paroi de la première partie 1 comprend une zone 4 où le matériau armé 2 n'est pas recouvert et forme la surface extérieure directement en contact avec l'extérieur de la paroi, une zone 5 où le matériau armé est recouvert par le matériau plastique, principalement en fine couche, et une zone 6 au-delà du pourtour 7 de l'ébauche en matériau armé 2 matérialisé par un trait pointillé où la paroi ne comprend que du matériau plastique 3. Des surépaisseurs 8 en matériau plastique sont réalisées sur la surface extérieure de la partie 1 en vue de renforcer les zones servant de déflecteur de piquets par exemple, pour former les trottoirs arrière et avant, ainsi que pour réaliser des dessins particuliers pour créer un effet esthétique attrayant. De plus, le matériau plastique est utilisé en plus fine épaisseur pour former un rabat 9 souple sur le cou de pied et une partie supérieure 10 souple au niveau du tibia, dans la zone 6 mentionnée ci-dessus.

Comme cela est illustré sur la figure 2, l'ébauche en matériau armé 2 présente une faible épaisseur et est aussi intégré dans la semelle 11 de la coque.

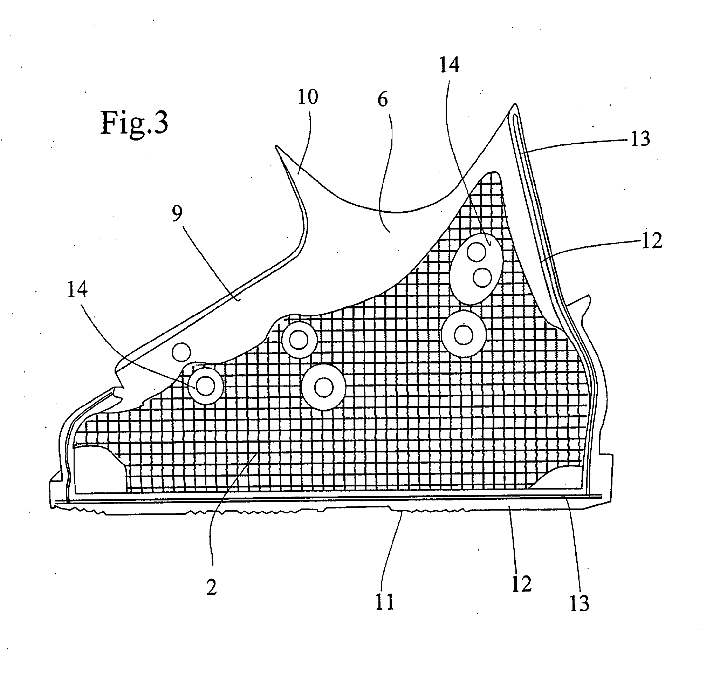

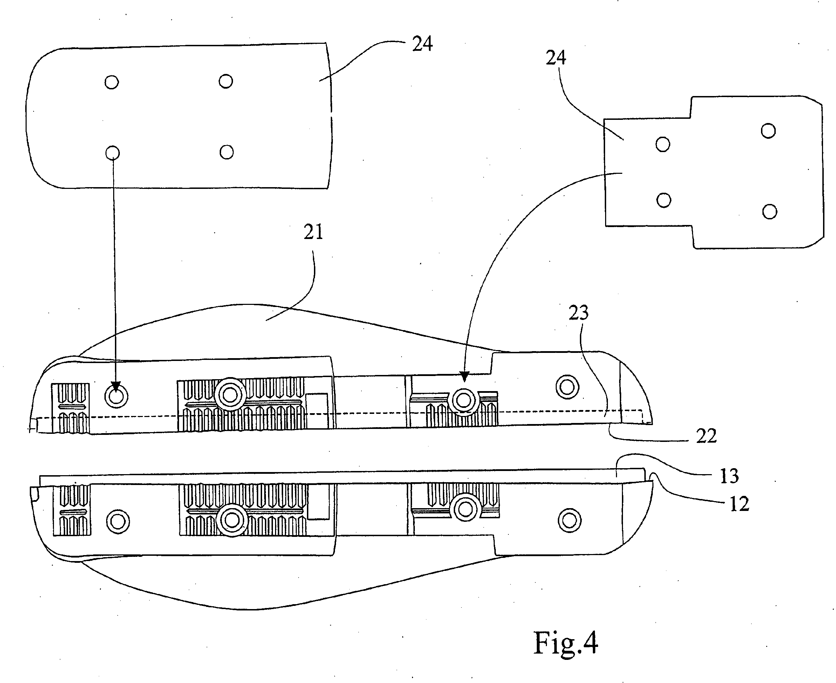

La figure 3 illustre une vue de la face intérieure de la paroi de la partie 1, c'est à dire la face qui sera en contact avec le pied d'un utilisateur dans la coque finalisée. Cette face comprend une première zone pour laquelle la paroi se compose du matériau armé 2 recouvert d'une fine couche de matériau plastique 3, cette zone correspondant aux zones 4 et 5 définies précédemment sur la face extérieure, et une seconde zone dans laquelle la paroi ne se compose que du matériau plastique, qui correspond à la zone 6 définie précédemment. La fonction de la fine couche de matériau plastique qui recouvre le matériau armé 2 est d'isoler thermiquement l'intérieur de la coque ; pour cette raison, une fine couche suffit. Une partie du pourtour de la partie 1 définit une surface d'assemblage 12, destinée à être reliée à la surface d'assemblage d'une partie correspondante comme cela sera décrit en relation avec la figure 4, parcourue sur toute sa longueur par une nervure 13. Cette surface d'assemblage est composée du matériau plastique 3, le matériau armé 2 s'en approchant à quelques millimètres. La zone 5 sur le pourtour de l'ébauche en matériau armé 2, sur laquelle le matériau armé est noyé dans le matériau plastique, c'est à dire pris en sandwich par le matériau plastique, participe à la réalisation d'une liaison mécanique entre les deux matériaux. Des ouvertures 14 sont de plus présentes dans le matériau armé 2 dans cette zone 5, qui sont remplies par le matériau plastique 3. Ces ouvertures 14 ont pour première fonction de réaliser une liaison mécanique entre les deux matériaux et pour seconde fonction de prédéfinir des points d'attache pour des futurs accessoires à fixer sur la coque. Cela évite d'avoir à percer le matériau armé, ce qui pourrait le fragiliser en provoquant une rupture des fibres et des fissures.

La figure 4 illustre une vue de dessous de deux parties 1, 21 complémentaires de coque de chaussure juste avant leur assemblage, qui consiste à accoler leurs deux surfaces d'assemblages 12 et 22, en intégrant la nervure 13 de la partie 1 dans la rainure 23 correspondante de la partie 21. L'assemblage est ensuite finalisé par une soudure, un collage, ou tout autre procédé d'assemblage équivalent. Cette liaison basée sur une nervure 13 permet d'assurer une bonne rigidité et résistance mécanique ainsi qu'une bonne étanchéité de la liaison. Des éléments de liaison 24 sont fixés sous la semelle afin de renforcer encore la fixation des deux parties 1 et 21. La partie 21 n'est pas illustrée en détail car elle présente une paroi très similaire à la partie 1.

Finalement, la coque obtenue comporte un matériau armé 2 présent sur plus de la moitié de la surface totale de sa paroi. De plus, excepté les zones du pourtour des ébauches en matériau armé 2 et des zones de renfort 8, la paroi de la coque comprenant le matériau armé est très peu épaisse, puisqu'elle comprend l'épaisseur du matériau armé éventuellement recouvert par une fine couche de matériau plastique. La coque se compose de deux parties 1, 21 distinguables, reliées par un moyen de fixation qui laisse visible une ligne d'assemblage au niveau des surfaces d'assemblage 12 et 22.

L'invention porte aussi sur le procédé de fabrication d'une telle coque de chaussure de ski, qui comprend donc les étapes suivantes :
- réalisation d'une ébauche en matériau armé 2 par thermoformage d'une matrice thermoplastique armée ;
- surinjection d'un matériau plastique 3 pour former une première partie 1 de la coque ;
- répétition des deux étapes précédentes pour former la deuxième partie 21 de la coque ;
- assemblage des deux parties.

Le matériau armé pourra consister en une matrice en polyuréthane comprenant des fibres de carbone ou de verre et le matériau plastique pourra être du polyuréthane. Selon une autre solution permettant un recyclage optimal de la chaussure, le matériau armé peut consister en des fibres de polypropylène noyées dans une matrice en polypropylène, le matériau plastique étant aussi du polypropylène. Les fibres pourront être selon les applications et caractéristiques recherchées des fibres de verre, de carbone, de Kevlar, ou de polypropylène.

Comme variantes de réalisation, l'ébauche peut être réalisée par un moulage sur forme d'une matrice thermodurcissable armée de fibres ou par emboutissage d'une tôle. Cette ébauche peut aussi comporter sur sa surface des nervures de renfort.

L'étape de surinjection pourra permettre de former la partie haute d'une coque, comprenant un rabat 9 et une partie 10 destinée à s'appuyer sur le tibia, ainsi que des renforts et/ou trottoirs avant et arrière 8, la surface d'assemblage 12 avec la nervure 13, et éventuellement des formes à caractères esthétiques.

En variante, l'étape de surinjection peut comprendre deux étapes successives d'injection de matériau plastique différent, permettant par exemple l'injection d'un polyuréthane de dureté de 65 shd pour former les trottoirs avant et arrière de l'interface avec la fixation de ski, et l'injection d'un polyuréthane plus souple de 45 shd pour former les rabats. La deuxième injection peut aussi consister en l'injection d'un matériau plastique alvéolaire sur la surface intérieure de la chaussure, afin d'exploiter ses propriétés de confort et d'isolant thermique.

L'assemblage pourra être réalisé par toute autre solution de soudure, collage, fixation mécanique.

L'invention a été décrite dans le cas d'une coque de chaussure de ski mais elle pourrait être appliquée au collier d'une chaussure de ski ou à un sous-ensemble d'une autre chaussure de sport.

Dans le mode d'exécution décrit précédemment, les deux parties de la coque correspondent à deux parties obtenues par la coupe de la coque par un plan vertical passant au centre des trottoirs avant et arrière. Toutefois, tout autre plan de coupe pourrait être imaginé. Les deux parties complémentaires pourraient aussi être conçues selon une coupe non plane, les surfaces d'assemblage n'étant pas planes. Enfin, le concept de l'invention pourrait aussi être appliqué avec l'assemblage de plus de deux parties d'un sous-ensemble de chaussure.

Le concept de l'invention consiste donc en l'association d'un matériau très rigide avec un matériau plastique surinjecté beaucoup plus souple, que nous appèlerons pour cette raison matériau plastique souple, le terme souple s'entendant comme incluant tout matériau plastique dont la souplesse est équivalente à celle d'un polyuréthane habituellement utilisé pour les chaussures, dont la dureté est comprise entre 30 et 70 shd, le terme très rigide s'entendant comme un matériau de rigidité nettement supérieure aux matériaux plastiques souples définis précédemment. Le matériau très rigide peut être toute matrice thermoplastique ou thermodurcissable armée de fibres ou tout matériau métallique, comme de l'inox, de l'aluminium ou du magnésium. Il a pour fonction d'assurer la rigidité de la chaussure, de par sa nature, et de garantir un poids léger, puisqu'il est par nature léger et qu'une couche peu épaisse suffit. Le matériau plastique surinjecté a pour fonction d'apporter de la souplesse dans des zones prédéterminées, de former les parties fonctionnelles et esthétiques plus complexes de la chaussure, tout en fixant les deux matériaux.

Le mode d'exécution décrit précédemment montre une combinaison intéressante d'un matériau très rigide avec un matériau plastique souple pour former une paroi de chaussure de sport. Cette combinaison pourrait toutefois être différente sans sortir du cadre de l'invention tel que défini par les revendications suivantes.

Le matériau plastique souple pourrait aussi recouvrir totalement le matériau très rigide sur la face extérieure, par exemple dans le but de protéger une décoration qui aurait été disposée à la surface du matériau très rigide et visible de l'extérieur en utilisant un matériau plastique transparent. L'ébauche en matériau très rigide pourrait aussi être disposée dans les trottoirs avant et/ou arrière de la coque. Finalement, l'invention concerne toute autre combinaison du matériau très rigide et du matériau plastique souple, selon le concept explicité ci-dessus, permettant d'atteindre les objectifs suivants :
- une paroi de chaussure très rigide et un poids réduit. Pour cela, l'ébauche en matériau très rigide doit occuper une surface importante de la paroi de la chaussure puisqu'elle apporte la rigidité et un poids réduit.

Cette surface est considérée importante si elle est de plus de la moitié de la surface totale de la paroi de la chaussure ;
- une paroi de chaussure présentant des zones souples et un poids réduit. Pour cela, le matériau plastique doit occuper toutes les zones de la chaussure nécessitant de la souplesse et se trouver globalement en faible quantité ou absent sur les autres zones où se trouve le matériau très rigide. Ainsi, sur la surface importante occupée par l'ébauche en matériau très rigide, le poids du matériau plastique présent est nettement plus faible que celui habituellement nécessaire pour les chaussures en plastique de l'art antérieur ;
- le procédé de fabrication doit être simple. Pour cela, le matériau très rigide est choisi selon une ébauche de forme relativement simple à fabriquer et le procédé d'injection du matériau plastique est utilisé pour former les formes plus complexes de la paroi de la chaussure. Notamment, ce matériau plastique peut former un design sur la surface extérieure de la chaussure. Ce design entraîne un surpoids acceptable puisque la chaussure est globalement plus légère, et son impact sur la rigidité est négligeable puisque la rigidité de la chaussure est principalement déterminée par l'ébauche en matériau très rigide. Ainsi, cette chaussure convient bien à la réalisation de design à l'aide de formes particulières réalisées en matériau plastique sur sa surface extérieure. Elle convient aussi bien à une esthétique réalisée par marquage puisqu'un tel marquage peut être disposé sur l'ébauche en matériau très rigide et être recouvert et protégé par un matériau plastique transparent surinjecté.

Finalement, les avantages de la solution sont donc les suivants :
- une grande rigidité, tout en conservant un bon compromis entre la rigidité et la souplesse nécessaire en certaines zones, un faible poids, comme cela a été développé ci-dessus ;
- une esthétique facilement réalisable sans entraîner de modifications majeures sur les propriétés fonctionnelles de la chaussure ;
- un procédé de fabrication simple.

## Revendications

1. Procédé de fabrication d'un sous-ensemble de chaussure de sport de type coque ou collier obtenu par l'assemblage de plusieurs parties, au moins deux de ces parties étant obtenues par les étapes suivantes :
- réalisation d'une ébauche en matériau très rigide (2), de rigidité nettement supérieure à un polyuréthane de dureté 70 shd-;
- surinjection d'un matériau plastique souple (3), de souplesse équivalente à celle d'un polyuréthane dont la dureté est comprise entre 30 et 70 shd, sur le matériau très rigide (2), liant le matériau très rigide au matériau plastique souple injecté, pour former une partie du sous-ensemble de chaussure de sport, dont une zone (6) au moins de la paroi du sous-ensemble obtenu ne se compose que du matériau plastique souple.

2. Procédé de fabrication d'un sous-ensemble de chaussure de sport de type coque ou collier selon la revendication 1 **caractérisé en ce que** l'étape de réalisation d'une ébauche en matériau très rigide (2) consiste en une étape de thermoformage d'une feuille composite composée d'une matrice thermoplastique armée de fibres.

3. Procédé de fabrication d'un sous-ensemble de chaussure de sport de type coque ou collier selon la revendication 1 **caractérisé en ce que** l'étape de réalisation d'une ébauche en matériau très rigide (2) consiste en une étape de moulage sur forme d'une matrice thermodurcissable armée de fibres.

4. Procédé de fabrication d'un sous-ensemble de chaussure de sport de type coque ou collier selon la revendication 1 **caractérisé en ce que** l'étape de réalisation d'une ébauche en matériau très rigide (2) consiste en une étape d'emboutissage d'une tôle.

5. Procédé de fabrication d'un sous-ensemble de chaussure de sport selon l'une des revendications précédentes, **caractérisé en ce que** l'étape de surinjection comprend l'injection de matériau plastique souple de part et d'autre de l'ébauche en matériau très rigide au moins sur certaines zones de sa surface.

6. Procédé de fabrication d'un sous-ensemble de chaussure de sport selon la revendication 5, **caractérisé en ce que** l'étape de surinjection comprend l'injection de matériau plastique souple de part et d'autre de l'ébauche en matériau très rigide au moins sur certaines zones de son pourtour.

7. Procédé de fabrication d'un sous-ensemble de chaussure de sport selon la revendication 6, **caractérisé en ce qu**'il comprend l'étape consistant à réaliser au moins un trou dans l'ébauche en matériau très rigide et en ce que l'étape d'injection comprend le passage du matériau plastique souple dans le trou pour traverser le matériau très rigide et réaliser une fixation entre le matériau très rigide et le matériau plastique souple.

8. Procédé de fabrication d'un sous-ensemble de chaussure de sport selon l'une des revendications précédentes, **caractérisé en ce que** l'étape de surinjection comprend l'injection d'une fine couche de matériau plastique souple sur la face intérieure du matériau très rigide.

9. Procédé de fabrication d'un sous-ensemble de chaussure de sport selon l'une des revendications précédentes, **caractérisé en ce que** l'étape de surinjection comprend deux sous-étapes successives d'injections de matériaux plastique souples différents.

10. Procédé de fabrication d'un sous-ensemble de chaussure de sport selon la revendication 9, **caractérisé en ce qu**'une des sous-étapes d'injection consiste en l'injection d'un matériau plastique souple alvéolaire sur la face intérieure du matériau très rigide.

11. Procédé de fabrication d'un sous-ensemble de chaussure de sport selon l'une des revendications précédentes, **caractérisé en ce que** l'étape de surinjection comprend la réalisation en matériau plastique souple, sur chacune des au moins deux parties, de surfaces d'assemblage complémentaires.

12. Procédé de fabrication d'un sous-ensemble de chaussure de sport selon la revendication 11, **caractérisé en ce que** l'étape de surinjection comprend la réalisation d'une nervure en matériau plastique souple sur la surface d'assemblage.

13. Procédé de fabrication d'un sous-ensemble de chaussure de sport selon la revendication 12, **caractérisé en ce que** l'étape d'assemblage de deux parties comprend l'intégration d'une nervure d'une première partie dans une rainure correspondante d'une seconde partie afin d'accoler les deux surfaces d'assemblages des parties correspondantes.

14. Procédé de fabrication d'un sous-ensemble de chaussure de sport selon l'une des revendications précédentes, **caractérisé en ce que** l'étape d'assemblage de deux parties comprend la fixation d'éléments de maintien sur chaque partie de part et d'autre de la ligne d'assemblage.

15. Procédé de fabrication d'un sous-ensemble de chaussure de sport selon l'une des revendications précédentes, **caractérisé en ce qu**'un élément de décoration est disposé sur l'ébauche en matériau très rigide et en ce que cet élément de décoration est recouvert par un matériau plastique souple transparent surinjecté.

16. Sous-ensemble de chaussure de sport de type coque ou collier comprenant au moins deux parties, comprenant chacune un matériau plastique souple, de souplesse équivalente à celle d'un polyuréthane dont la dureté est comprise entre 30 et 70 shd, et un matériau très rigide,-de rigidité nettement supérieure à un polyuréthane de dureté 70 shd, partiellement noyé dans le matériau plastique souple, une partie au moins de la paroi du sous-ensemble de chaussure obtenue ne se composant que du matériau plastique souple et les au moins deux parties comprenant une surface d'assemblage pour leur fixation entre elles.

17. Sous-ensemble de chaussure de sport selon la revendication 16, **caractérisé en ce que** le matériau très rigide occupe au moins la moitié de la surface totale de la paroi du sous-ensemble.

18. Sous-ensemble de chaussure de sport selon l'une des revendications 16 ou 17, **caractérisé en ce que** le matériau plastique souple recouvre au moins partiellement les deux surfaces intérieures et extérieures du pourtour du matériau très rigide.

19. Sous-ensemble de chaussure de sport selon la revendication 18, **caractérisé en ce que** le matériau très rigide présente au moins un trou rempli par le matériau plastique souple.

20. Sous-ensemble de chaussure de sport selon l'une des revendications 16 à 19, **caractérisé en ce que** le matériau très rigide présente une partie de sa surface extérieure non recouverte par du matériau plastique souple.

21. Sous-ensemble de chaussure de sport selon l'une des revendications 16 à 20, **caractérisé en ce qu**'il comprend une décoration disposée sur la surface extérieure du matériau très rigide et recouverte au moins partiellement parle matériau plastique souple transparent.

22. Sous-ensemble de chaussure de sport selon l'une des revendications 16 à 21, **caractérisé en ce que** le matériau très rigide présente des nervures de renfort sur sa face extérieure.

23. Sous-ensemble de chaussure de sport selon l'une des revendications 16 à 22, **caractérisé en ce que** le matériau très rigide est un matériau plastique armé de fibres ou un matériau métallique.

24. Coque de chaussure de ski selon l'une des revendications 16 à 23, **caractérisée en ce qu**'elle comprend deux parties, en ce que le matériau plastique souple forme dans sa partie haute deux rabats et en ce que la surface intérieure de la coque est recouverte au moins par une fine couche de matériau plastique souple servant d'isolant thermique.

25. Coque de chaussure de ski selon la revendication 24, **caractérisée en ce que** le matériau plastique souple forme des renforts sur la surface extérieure de la paroi.

26. Chaussure de ski, **caractérisée en ce qu**'elle comprend un sous-ensemble selon l'une des revendications 16 à 23.

## Claims

1. A process for manufacturing a sports boot subassembly of the shell or collar type obtained by the assembly of several parts, at least two of these parts being obtained by means of the following steps:
- production of a blank in very stiff material (2), whose hardness is of markedly greater stiffness than a polyurethane whose hardness is 70 shd ;
- injection-overmolding of a flexible plastics material (3), whose flexibility equivalent to that of a polyurethane whose hardness is between 30 and 70 shd, over the very stiff material (2), linking the very stiff material to the injection-molded flexible plastics material, in order to form part of the sports boot subassembly, which comprises at least a part (6) of the wall of the subassembly that is made only of flexible plastics material.

2. The process for manufacturing a sports boot subassembly of the shell or collar type as claimed in claim 1, **characterized in that** the step of producing a blank in very stiff material (2) consists in a step of thermoforming a composite sheet composed of a fiber-reinforced thermoplastic matrix.

3. The process for manufacturing a sports boot subassembly of the shell or collar type as claimed in claim 1, **characterized in that** the step of producing a blank in very stiff material (2) consists in a step of last-molding a fiber-reinforced thermosetting matrix.

4. The process for manufacturing a sports boot subassembly of the shell or collar type as claimed in claim 1, **characterized in that** the step of producing a blank in very stiff material (2) consists in a step of drawing a metal sheet.

5. The process for manufacturing a sports boot subassembly as claimed claim 1, **characterized in that** the injection-overmolding step comprises the injection of flexible plastics material on either side of the blank in very stiff material, at least over certain zones of its surface.

6. The process for manufacturing a sports boot subassembly as claimed in claim 5, **characterized in that** the injection-overmolding step comprises the injection-molding of flexible plastics material on either side of the blank in very stiff material, at least over certain zones of its periphery.

7. The process for manufacturing a sports boot subassembly as claimed in claim 6, **characterized in that** it comprises the step consisting in producing at least one hole in the blank in very stiff material and
**characterized in that** the injection-molding step comprises the passage of the flexible plastics material through the hole in order to traverse the very stiff material and to produce a fixing between the very stiff material and the flexible plastics material.

8. The process for manufacturing a sports boot subassembly as claimed in one of previous claims, **characterized in that** the injection-overmolding step comprises the injection-molding of a thin layer of flexible plastics material over the inner face of the very stiff material.

9. The process for manufacturing a sports boot subassembly as claimed in one of previous claims, **characterized in that** the injection-overmolding step comprises two successive substeps of injection-molding different flexible plastics materials.

10. The process for manufacturing a sports boot subassembly as claimed in claim 9, **characterized in that** one of the injection-molding substeps consists of the injection-molding of a cellular flexible plastics material over the inner face of the very stiff material.

11. The process for manufacturing a sports boot subassembly as claimed in one of previous claims, **characterized in that** the injection-overmolding step comprises the production in flexible plastics material, on each of the at least two parts, of complementary assembly surfaces.

12. The process for manufacturing a sports boot subassembly as claimed in claim 11, **characterized in that** the injection-overmolding step comprises the production of a rib in flexible plastics material on the assembly surface.

13. The process for manufacturing a sports boot subassembly as claimed in claim 12, **characterized in that** the step of assembling two parts comprises the incorporation of a rib of a first part into a corresponding groove of a second part in order to join the two assembly surfaces of the corresponding parts.

14. The process for manufacturing a sports boot subassembly as claimed in one of previous claims, **characterized in that** the step of assembling two parts comprises the fixing of holding elements on each part on either side of the assembly line.

15. The process for manufacturing a sports boot subassembly as claimed one of previous claims, **characterized in that** a decorative element is arranged on the blank in very stiff material and wherein said decorative element is covered by an injection-overmolded transparent flexible plastics material.

16. A sports boot subassembly of the shell or collar type, which comprises at least two parts, each comprising a flexible plastics material, whose flexibility equivalent to that of a polyurethane whose hardness is between 30 and 70 shd, and a very stiff material, whose hardness is of markedly greater stiffness than a polyurethane whose hardness is 70 shd, partially embedded in the flexible plastics material, at least a part of the wall of the boot subassembly being made only of flexible plastics material, and the at least two parts comprising an assembly surface for fixing them together.

17. The sports boot subassembly as claimed in claim 16, **characterized in that** the very stiff material occupies at least half the total surface area of the wall of the subassembly.

18. The sports boot subassembly as claimed in claim 16, **characterized in that** the flexible plastics material at least partially covers the two inner and outer surfaces of the periphery of the very stiff material.

19. The sports boot subassembly as claimed in claim 18, **characterized in that** the very stiff material has at least one hole filled by the flexible plastics material.

20. The sports boot subassembly as claimed in one of claims 16 to 19, **characterized in that** the very stiff material has a part of its outer surface not covered by flexible plastics material.

21. The sports boot subassembly as claimed in one of claims 16 to 20, which comprises a decoration arranged on the outer surface of the very stiff material and at least partially covered by the transparent flexible plastics material.

22. The sports boot subassembly as claimed in one of claims 16 to 21, **characterized in that** the very stiff material has reinforcement ribs on its outer face.

23. The sports boot subassembly as claimed in one of claims 16 to 22, **characterized in that** the very stiff material is a fiber-reinforced plastics material or a metallic material.

24. A ski boot shell as claimed in one of claims 16 to 23, which comprises two parts, **characterized in that** the flexible plastics material forms two flaps in its top part and wherein the inner surface of the shell is covered at least by a thin layer of flexible plastics material serving as thermal insulation.

25. The ski boot shell as claimed in claim 24, **characterized in that** the flexible plastics material forms reinforcements on the outer surface of the wall.

26. A ski boot, comprising a subassembly as claimed in one of claims 16 to 23.

## Patentansprüche

1. Verfahren zur Herstellung eines aus mehreren Teilen zusammengefügten Teilstücks eines Sportschuhs vom Schalen- oder Manschettentyp, von denen wenigstens zwei Teile durch folgende Schritte erhalten werden:
- Herstellen eines Rohlings aus sehr steifem Material (2), dessen Steifheit grösser ist als die eines Polyurethans der Härte 70 shd (Shore d);
- Überspritzen des sehr steifen Materials (2) mit einem nachgiebigen Kunststoffmaterial, dessen Nachgiebigkeit derjenigen eines Polyurethans mit einer Härte zwischen 30 und 70 shd (Shore d) äquivalent ist, wobei das sehr steife Material mit dem verspritzten nachgiebigen Kunststoffmaterial verbunden wird, um einen Teil des Teilstücks des Sportschuhs zu bilden, bei welchem wenigstens ein Bereich (6) der Wand des erhaltenen Teilstücks nur aus dem nachgiebigen Kunststoffmaterial besteht.

2. Verfahren nach Anspruch 1, **dadurch gekennzeichnet, dass** der Schritt der Herstellung eines Rohlings aus sehr steifem Material (2) aus einem Schritt der Wärmeformung einer Verbundfolie besteht, die aus einer faserverstärkten thermoplastischen Matrize zusammengesetzt ist.

3. Verfahren nach Anspruch 1, **dadurch gekennzeichnet, dass** der Schritt der Herstellung eines Rohlings aus sehr steifem Material (2) aus einem Schritt des Formpressens einer faserverstärkten, in Wärme aushärtenden Matrize besteht.

4. Verfahren nach Anspruch 1, **dadurch gekennzeichnet, dass** der Schritt der Herstellung eines Rohlings aus sehr steifem Material (2) aus einem Schritt des Tiefziehens eines Blechs besteht.

5. Verfahren nach einem der vorangehenden Ansprüche, **dadurch gekennzeichnet, dass** der Schritt des Überspritzens darin besteht, dass das nachgiebige Kunststoffmaterials beiderseits des aus sehr steifem Material bestehenden Rohlings auf wenigstens bestimmte Bereiche seiner Oberfläche gespritzt wird.

6. Verfahren nach Anspruch 5, **dadurch gekennzeichnet, dass** der Schritt des Überspritzens darin besteht, dass das nachgiebige Kunststoffmaterials beiderseits des aus sehr steifem Material bestehenden Rohlings auf wenigstens bestimmte Bereiche seines Umfangs gespritzt wird.

7. Verfahren nach Anspruch 6, **dadurch gekennzeichnet, dass** es den Schritt zur Herstellung wenigstens eines Lochs im aus sehr steifem Material bestehenden Rohling einschliesst und dass beim Schritt des Spritzens das nachgiebige Kunststoffmaterial dieses Loch ausfüllt, um das sehr steife Material zu durchqueren und eine Befestigung zwischen dem sehr steifen Material und dem nachgiebigen Kunststoffmaterial herzustellen.

8. Verfahren nach einem der vorangehenden Ansprüche, **dadurch gekennzeichnet, dass** beim Schritt des Überspritzens eine feine Schicht aus nachgiebigem Kunststoffmaterial auf die Innenseite des sehr steifen Materials gespritzt wird.

9. Verfahren nach einem der vorangehenden Ansprüche, **dadurch gekennzeichnet, dass** der Schritt des Überspritzens zwei aufeinanderfolgende Unterschritte des Spritzens verschiedener nachgiebiger Kunststoffmaterialien einschliesst.

10. Verfahren nach Anspruch 9, **dadurch gekennzeichnet, dass** einer der Unterschritte des Spritzens darin besteht, dass ein zellenförmiges nachgiebiges Kunststoffmaterial auf die Innenseite des sehr steifen Materials gespritzt wird.

11. Verfahren nach einem der vorangehenden Ansprüche, **dadurch gekennzeichnet, dass** der Schritt des Überspritzens darin besteht, dass auf jedem der wenigstens zwei Teile komplementäre Verbindungsflächen aus nachgiebigem Kunststoffmaterial hergestellt werden.

12. Verfahren nach Anspruch 11, **dadurch gekennzeichnet, dass** beim Schritt des Überspritzens eine Rippe aus nachgiebigem Kunststoffmaterial auf der Verbindungsfläche gebildet wird

13. Verfahren nach Anspruch 12, **dadurch gekennzeichnet, dass** beim Schritt des Zusammenfügens der beiden Teile eine Rippe eines ersten Teils in eine entsprechende Nut eines zweiten Teils eingreift, um die beiden Verbindungsflächen der entsprechenden Teile zusammenzufügen.

14. Verfahren nach einem der vorangehenden Ansprüche, **dadurch gekennzeichnet, dass** beim Schritt des Zusammenfügens der beiden Teile Halteelemente auf jedem Teil beiderseits der Verbindungslinie befestigt werden.

15. Verfahren nach einem der vorangehenden Ansprüche, **dadurch gekennzeichnet, dass** ein dekoratives Element auf dem Rohling aus sehr steifem Material angeordnet wird und dass dieses dekorative Element von einem überspritzten transparenten nachgiebigen Kunststoffmaterial überdeckt wird.

16. Teilstück eines Sportschuhs vom Schalen- oder Manschettentyp aus wenigstens zwei Teilen, die jeder ein nachgiebiges Kunststoffmaterial, dessen Nachgiebigkeit derjenigen eines Polyurethans mit der Härte zwischen 30 und 70 shd (Shore d) äquivalent ist, und ein sehr steifes Material aufweisen, dessen Steifheit deutlich grösser als ein Polyurethan mit der Härte 70 shd (Shore d) ist und welches teilweise in das nachgiebige Kunststoffmaterial eingebettet ist, wobei wenigstens ein Teil der erhaltenen Wand des Teilstücks des Schuhs nur aus dem nachgiebigen Kunststoffmaterial besteht und die wenigstens zwei Teile eine Verbindungsfläche haben, um sie miteinander zu befestigen.

17. Teilstück nach Anspruch 16, **dadurch gekennzeichnet, dass** das sehr steife Material wenigstens die Hälfte der Gesamtoberfläche der Wand des Teilstücks einnimmt.

18. Teilstück nach einem der Ansprüche 16 oder 17, **dadurch gekennzeichnet, dass** das nachgiebige Kunststoffmaterial wenigstens teilweise die beiden Innen- und Aussenflächen des Umfangs des sehr steifen Materials bedeckt.

19. Teilstück nach Anspruch 18, **dadurch gekennzeichnet, dass** das sehr steife Material wenigstens ein Loch aufweist, das mit dem nachgiebigen Kunststoffmaterial gefüllt ist.

20. Teilstück nach einem der Ansprüche 16 bis 19, **dadurch gekennzeichnet, dass** ein Teil der Aussenfläche des sehr steifen Materials nicht vom nachgiebigen Kunststoffmaterial bedeckt ist.

21. Teilstück nach einem der Ansprüche 16 bis 20, **dadurch gekennzeichnet, dass** es eine Verzierung aufweist, welche auf der Aussenfläche des sehr steifen Materials angeordnet und wenigstens teilweise vom transparenten nachgiebigen Kunststoffmaterial bedeckt ist.

22. Teilstück nach einem der Ansprüche 16 bis 21, **dadurch gekennzeichnet, dass** das sehr steife Material auf seiner Aussenseite Verstärkungsrippen hat.

23. Teilstück nach einem der Ansprüche 16 bis 22, **dadurch gekennzeichnet, dass** das sehr steife Material ein faserverstärktes Kunststoffmaterial oder ein metallisches Material ist.

24. Schale eines Schischuhs nach einem der Ansprüche 16 bis 23, **dadurch gekennzeichnet, dass** sie zwei Teile aufweist, dass das nachgiebige Kunststoffmaterial an seinem oberen Teil zwei Klappen bildet und dass die Innenfläche der Schale von wenigstens einer Schicht des als Wärmeisolierung dienenden nachgiebigen Kunststoffmaterials bedeckt ist.

25. Schale eines Schischuhs nach Anspruch 24, **dadurch gekennzeichnet, dass** das nachgiebige Kunststoffmaterial auf der Aussenseite der Wand Verstärkungen bildet.

26. Schischuh, **dadurch gekennzeichnet, dass** er ein Teilstück nach einem der Ansprüche 16 bis 23 aufweist.
